# EUROPEAN PATENT APPLICATION

(11) **EP 3 043 596 A1**
(43) Date of publication of application: **13.07.2016**
(21) Application number: 14791731.4
(22) Date of filing: 21.05.2014
(51) Int. Cl.: H04W 36/08

(54) **IP MOBILITY METHOD AND SYSTEM, ACCESS POINT DEVICE, AND WIRELESS ACCESS CONTROLLER**

(30) Priority: 04.09.2013 CN 201310397804
(71) Applicant: ZTE Corporation, 518057 Shenzhen City, Guangdong Province (CN)
(72) Inventor: WEI, Yuan, Shenzhen City Guangdong 518057 (CN)
(74) Representative: Novagraaf Technologies
(86) International application number: PCT/CN2014/077961
(87) International publication number: WO 2014/177093

(57) **Abstract**

A method and system for implementing IP mobility, an access point device, and a wireless access controller are disclosed in the embodiments of the present invention, which belongs to the field of communications. The method disclosed in the embodiment of the present invention includes: an AC receiving and storing an IP address used when a terminal initially accesses a network monitored by an AP; when the terminal accesses a network through fast handover and uses the IP address used when initially accessing the network, the AC sending the stored IP address used when the terminal initially accesses the network to a new access point when the terminal accesses the network through fast handover; the new access point sending a terminal handover message to a home router corresponding to the terminal, to notify the home router that the terminal has become an access user of the new access point. An IP mobility system, an AP device and an AC are also disclosed in the embodiments of the present invention. With the technical scheme of the present invention, a same IP address is maintained when the terminal moves in an IP network, and the router rapidly refreshes a forwarding port table, thereby maintaining the service continuity.

## Description

### Technical Field

The present invention belongs to the field of communications, and relates to the scheme of implementing fast routing notification, so that a router supports the IP mobility and service continuity after a terminal hands over to a new wireless access point (or called a base station).

### Background of the Related Art

With the development of mobile data networks such as 3G/LTE/WiFi and the widespread use of intelligent handheld terminals such as mobile phones/tablet computers, various kinds of mobile data services develop rapidly, which makes the mobile data networks quickly move towards the hot area coverage from the hotspot coverage. To support the IP mobility within the hot area to maintain the user experience has become a requisite function of the mobile data networks.

At present, the mobile data networks use a star schema of base station + base station controller. When a terminal performs handover between the base stations, a base station controller is responsible for the maintenance of identity information of the terminal and the handover of data channels.

With the deployment of wireless broadband technologies such as LTE and WiFi, an air interface rate is about to enter the era of 1 Gbps. If it continues to use the star schema of base station+base station controller, since one base station controller normally takes charge of dozens of base stations to thousands of base stations, the base station controller will be under the pressure of enormous data forwarding, so that the routing and forwarding performance thereof is extremely high, and it becomes a data bottleneck.

Meanwhile, a bearer network still needs high-performance switches and routers to transmit data. Therefore, a service network and the bearer network form two overlay networks, and in such overlapped architecture, the forwarding delay is increased, the management complexity and probability of failure are increased, and the construction and maintenance costs of the network are more greatly increased.

Moreover, there has been long-term study on how the data networks to support the IP mobility, and a series of numerous protocols are formed.

An MIP protocol needs to be supported by a client, and it has efficiency problems such as triangle routing and so on. Therefore, a PMIP protocol which is completely taken charge by the network side to support the IP mobility is also developed.

But the PMIP protocol is a star schema of MAG + LMA, the LMA will become a data bottleneck, besides it is required that both the router and the wireless access point support the PMIP protocol, the network architecture of the LMA still forms two overlay networks of the service network (the MAG / LMA supporting the IP mobility) and the bearer network.

There is also a DSMIP protocol where the terminal is dominant. The terminal initiates a DSMIPv6 signaling in a control plane: an MIPv6 signaling can be encapsulated in an IPv4 tunnel to be sent. The terminal maintains a data tunnel to a PDN GW in a data plane: user data streams are directly forwarded by the terminal to the PDN GW via a GRE tunnel. Due to the patent barrier of Qualcomm Incorporated, it is difficult to obtain the support from other manufacturers and operators for the standard.

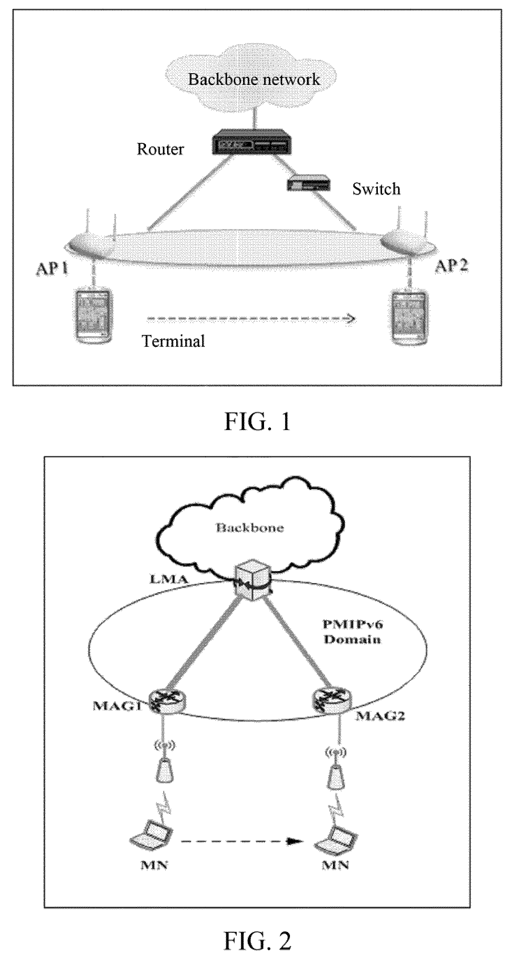

When one terminal performs handover between various ports of the router, the current router technology has been able to allocate a same IP address to the terminal (as shown in FIG. 1), but it is required that the terminal initiates a DHCP flow to refresh the data routing of the router and the switch thereof. The time consumption of the DHCP is larger, and when the handover is performed frequently, the terminal repeatedly initiating the DHCP is unnecessary and also increases the network load.

The users with the fixed IP addresses never initiate the DHCP flow.

All these will cause that the service is discontinuous after the terminal performs handover, and even the service is interrupted, which severely brings down the user experience.

Since the DHCP protocol is designed based on the fixed IP network, a scenario of the mobile terminal handover is not considered. After the layer 2 of the terminal is disconnected and reconnected, the DHCP flow is promptly started to reacquire the IP address.

With the current wireless coverage technology, the reaccessing time of the layer 1 and layer 2 after the terminal performs handover has been within seconds and even 500 milliseconds.

The ideal DHCP start mechanism appropriate for the mobile scenario is that: when the layer 2 is temporarily interrupted (such as less than 5 seconds), the DHCP is not started, and the terminal continues to use an original IP address; and after the temporary interruption time is exceeded, the DHCP is started.

Therefore, the terminal can immediately continue to use the original IP address after performing handover so as to maintain the service continuity; and after being offline for a long period, it also can start the DHCP to reacquire the IP address. Therefore, it can give consideration to the two cases of handover and offline.

Certainly, after the terminal performs handover across subnetworks, the original address is invalid, and the DHCP should be initiated promptly so as to acquire a new address.

The above various kinds of problems can be better solved by using the network architecture with separating control and forwarding (as shown in FIG. 2). The base station controller retains functions such as user identity authentication and service control and base station management, and integrates the functions into the control layer of the network; and uses a single bearer network to forward the data and support the IP mobility. The service continuity is kept when the terminal moves, so as to maintain good user experience.

### Summary of the Invention

The embodiments of the present invention provide a method and system for implementing IP mobility, an access point device, and a wireless access controller, to solve the problem that the IP network better supports the IP mobility of the terminal.

In order to solve the above problem, the embodiment of the present invention discloses a method for implementing IP mobility, which comprises:
a wireless access controller (AC) receiving and storing an IP address monitored by a wireless access point (AP) and used when a terminal initially accesses a network;
when the terminal accesses a network through fast handover and uses the IP address used when initially accessing the network, the AC sending a stored IP address used when the terminal initially accesses the network to a new access point when the terminal accesses the network through fast handover;
the new access point sending a terminal handover message to a home router corresponding to the terminal, to notify the home router that the terminal has become an access user of the new access point.

Alternatively, in the above method, the terminal handover message carries a source IP address and a source media access control (MAC) address of a terminal handing over to the new AP.

Alternatively, in the above method, the terminal handover message is a proxy address resolution protocol (ARP) message or a newly defined message.

Alternatively, the above method further comprises:
the home router receiving the terminal handover message, according to the source MAC address in the terminal handover message, refreshing an IP address/port table and an MAC address/port table, and sending all downlink data of the terminal to the port.

Alternatively, in the above method, the process of an AC receiving and storing an IP address monitored by an AP and used when a terminal initially accesses a network is as follows:
when the terminal accesses the network through an initial network accessing flow, a source AP when the terminal accesses the network monitoring the initial network accessing flow in real time, and sending a monitored IP address used when the terminal initially accesses the network to a corresponding AC; and
the AC receiving and storing the IP address.

Alternatively, in the initial network accessing flow, a process of the terminal acquiring an IP address used when initially accessing the network is as follows:
a terminal which passes an identity authentication applying for an IP address by means of dynamic host configuration protocol (DHCP), and the home router allocating or proxy allocating an IP address to the terminal; or
a network administrator allocating a fixedly-used IP address to the terminal.

The embodiment of the present invention further discloses an access point (AP) device, which comprises:
a first unit, configured to monitor an initial network accessing flow of a terminal in real time;
a second unit, configured to send an IP address allocated to the terminal in the monitored initial network accessing flow to a corresponding access controller (AC) for use when the terminal performs fast handover.

Alternatively, the above device further comprises:
a third unit, configured to: when a terminal hands over to a current AP device through a fast handover flow and uses an IP address used when initially accessing the network, receive an IP address of a terminal successfully handing over to the current AP sent by the corresponding AC, and send a terminal handover message to a home router corresponding to the terminal newly handing over to the current AP.

Alternatively, in the above device, the terminal handover message carries a source IP address and a source MAC address of the terminal newly handing over to the AP.

Alternatively, in the above device, the terminal handover message is a proxy ARP message or a newly defined message.

The embodiment of the present invention further discloses a wireless access controller (AC), which comprises:
a first unit, configured to receive and store an IP address of a terminal accessing a wireless network through an initial network accessing flow sent by a wireless access point (AP) for use when the terminal performs fast handover;
a second unit, configured to: when the terminal accesses the wireless network through the fast handover and uses an IP address used when initially accessing the network, send a stored IP address used when the terminal initially accesses the network to a new AP to which the fast handover is performed.

The embodiment of the present invention further discloses a system for implementing IP mobility, which comprises the access point device as mentioned above and the wireless access controller as mentioned above.

A scheme of the home router obtaining mobile information of the terminal is proposed in the technical scheme of the present invention (The home router refers to the first routing device which the uplink data of the terminal go through after the terminal accesses the wireless network. The uplink data refer to data sent by the terminal to the network side, and data sent from the network side to the terminal are called the downlink data), so that a same IP address is maintained when the terminal moves in the IP network, the router rapidly refreshes a forwarding port table, thereby maintaining the service continuity. Moreover, in the technical scheme of the present invention, the data can be forwarded and the IP mobility can be supported by using a single bearer network, which avoids adding another set of network protocols to support the IP mobility (such as MIP/PMIP protocol and so on). It can be seamlessly integrated with the future network architectures such as the software defined network and the control and forwarding separation network and so on.

### Brief Description of Drawings

FIG. 1 is handover of the terminal in the WLAN network;
FIG. 2 is a diagram of the typical network architecture of the Proxy mobile IPv6 protocol;
FIG. 3 is a flow chart of the IP mobility after the fast handover when the terminal always uses a fixed IP address in the embodiment;
FIG. 4 is a flow chart of the IP mobility after the fast handover when the terminal initially obtains an IP address through the DHCP in the embodiment;
FIG. 5 is a flow chart of the terminal obtaining an IP address all through the DHCP before and after the handover.

### Preferred Embodiments of the Invention

The technical scheme of the present invention will be further described in detail in combination with the accompanying drawings below. The embodiments in the present invention and the characteristics in the embodiments can be arbitrarily combined with each other in the case of no conflict.

### Embodiment 1

The embodiment provides a method for implementing IP mobility, which includes the following operations:
When the terminal accesses the network after being off-network for a long period due to newly accessing the network, starting up or other reasons (the period is specified by the network operator, such as 5 minutes or 1 hour and so on), an "initial network accessing flow" will be started, that is, firstly the identity authentication is passed, then the IP address is obtained by any one of the following two ways, wherein, a source AP will monitor the initial network accessing flow in real time, and send the IP address allocated to the terminal to a corresponding AC;
   1) The IP address is applied for by means of DHCP, and an home router allocates or proxy allocates the address.
   2) A fixedly-used IP address is allocated by a network administrator;
   when the terminal reaccesses the network after being off-network for a short period (the period is specified by the network operator, such as less than 5 seconds or 1 minute and so on), a "fast handover flow" will be started. That is, after the identity authentication is completed, the IP address used before the handover is directly used. With regard to those terminals that cannot directly use the IP address before the handover, a "standard handover flow" will be started, that is, firstly the identity authentication is performed, and then an IP address is acquired through a DHCP flow.

After the terminal successfully hands over to a new wireless access point (such as an AP of the WLAN network and a base station of the 3GPP cellular network and so on) and uses the IP address before the handover, the AC notifies the new wireless access point of the IP address of the terminal (that is, the AC sends the stored IP address used when the terminal initially accesses the network to the new AP), and the new wireless access point (i.e. the second AP) sends a terminal handover message to its home router, to notify the home router that one of a plurality of terminals of the MAC addresses has become an access user of the new wireless access point.

The terminal handover message may be a proxy ARP message or a newly defined message. No matter which kind of message format is used, the terminal handover message is required to carry a source IP address and a source MAC address of the terminal handing over to the new wireless access point.

In addition, the wireless access point is connected to the terminal via the individual port of the router. Therefore, after the terminal performs handover on the wireless access point, the port leading the terminal to the router may be changed. Based on such case, a preferred scheme proposes that, after receiving a terminal handover message or an ARP message, the home router and other switches under it will refresh an IP address/port table and an MAC address/port table according to the source MAC address in the message (namely the MAC address of the terminal), and send all downlink data of the terminal to the port. While, uplink data of the terminal can be directly transmitted without any alteration made by other network elements.

The technical scheme of the present invention will be further elaborated in detail in combination with the accompanying drawings and embodiments below.

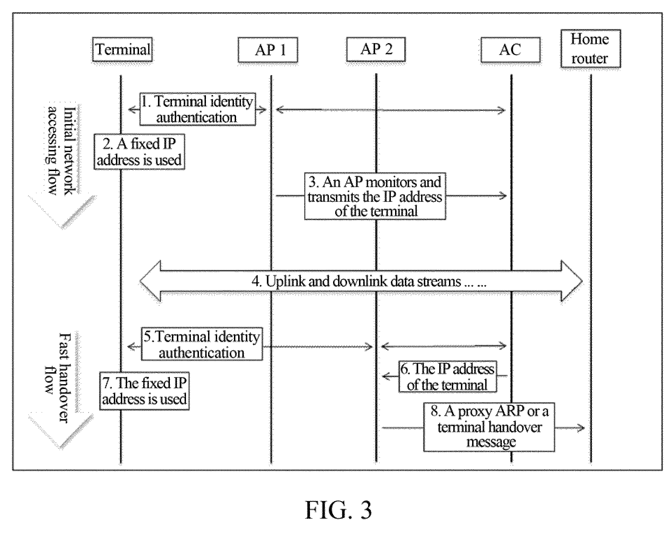

FIG. 3 is a flow chart of handover when the terminal always uses a fixed IP address.

The initial accessing flow is as follows:
1. The identity authentication of the terminal is completed, and the AC acquires a handover flow which will be used by the terminal (if the EAP mode is used, the AC is an authentication point);
2. The terminal directly uses the fixed IP address allocated by the network operator;
3. The IP address of the terminal is monitored by the source AP (i.e. the AP when the terminal initially accesses the network) and sent to the AC, and stored in the AC or the database on it;
4. The terminal interacts the uplink and downlink data streams with the network.

The fast handover flow is as follows:
5. The terminal hands over to an AP2 (i.e. a new AP to which handover is performed) and completes the identity authentication, and through the user attributes, the AC finds the IP address used by the terminal (namely the IP address used when the terminal initially accesses the network);
6. The AC informs the new AP of the IP address of the terminal and the terminal uses the fast handover flow;
7. The IP address of the terminal directly uses the allocated fixed IP address;
8. The AP2 sends a terminal handover message carrying a source IP address and a source MAC address of the terminal to a home router, the router updates a port/MAC/IP address table, and a switch between the AP2 and the home router updates an MAC/port table.

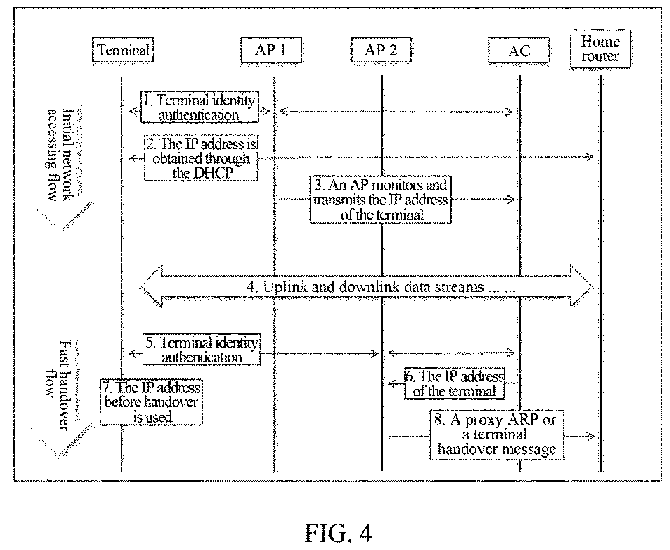

FIG. 4 is for the terminal initially obtaining an IP address through the DHCP, and using the IP address before the handover after the handover is performed.

The initial accessing flow is as follows:
1. The identity authentication of the terminal is completed, and the AC acquires a handover flow which will be used by the terminal;
2. The terminal obtains the IP address through the DHCP, and the home router allocates or proxy allocates the IP address;
3. The IP address of the terminal is monitored by the source AP (i.e. the AP when the terminal initially accesses the network) and sent to the AC, and stored in the AC or the database on it;
4. The terminal interacts the uplink and downlink data streams with the network.

The fast handover flow is as follows:
5. The terminal hands over to an AP2 and completes the identity authentication, and through the user attributes, the AC finds the IP address used by the terminal and the handover flow to be used by the terminal;
6. The AC informs the AP2 of the IP address of the terminal and the terminal uses the fast handover flow;
7. The terminal uses the IP address before the handover (i.e. the IP address used when the terminal initially accesses the network);
8. The AP2 sends a terminal handover message carrying a source IP address and a source MAC address of the terminal to a home router, the router updates a port/MAC/IP address table, and a switch between the AP2 and the home router updates an MAC/port table;

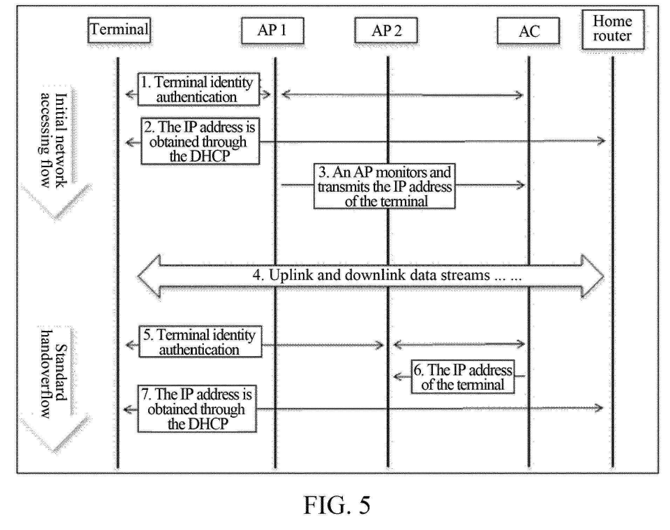

FIG. 5 is for the terminal obtaining an IP address all through the DHCP before and after the handover.

The initial accessing flow is as follows:
1. The identity authentication of the terminal is completed, and the AC acquires a handover flow which will be used by the terminal;
2. The terminal obtains the IP address through the DHCP, and the home router allocates or proxy allocates the IP address;
3. The IP address of the terminal is monitored by the source AP (i.e. the AP when the terminal initially accesses the network) and sent to the AC, and stored in the AC or the database on it;
4. The terminal interacts the uplink and downlink data streams with the network.

The standard handover flow is as follows:
5. The terminal hands over to an AP2 and completes the identity authentication, and by querying the user attributes, the AC can know the IP address used by the terminal and the handover flow to be used by the terminal;
6. The AC informs the AP of the IP address of the terminal and the terminal uses the standard handover flow;
7. The terminal obtains the IP address through the DHCP. The home router allocates or proxy allocates an IP address identical with the IP address before the handover, to support the IP mobility of the terminal.

### Embodiment 2

The embodiment introduces an access point (AP) device, which can implement various operations in the above embodiment 1. The device at least includes the following two units:
A first unit, configured to monitor an initial network accessing flow of a terminal in real time, and
A second unit, configured to send an IP address allocated to the terminal in the monitored initial network accessing flow to a corresponding access controller (AC) for use when the terminal performs fast handover.

The architecture of the above device is mainly proposed aiming at the device serving as the source AP, but the above AP device may also be a new AP to which other certain terminals perform fast handover, at this point, the AP device also can include a third unit, the third unit is configured to: when a terminal hands over to the current AP device through a fast handover flow and uses an IP address used when initially accessing the network, receive an IP address of a terminal successfully handing over to the current AP sent by the corresponding AC, and send a terminal handover message to a home router corresponding to the terminal newly handing over to the current AP.

Wherein, the above terminal handover message carries a source IP address and a source MAC address of the terminal newly handing over to the AP. The terminal handover message can be a proxy ARP message or a newly defined message.

Other operation details of the above AP device may refer to the corresponding descriptions in the embodiment 1, which will not be repeated here.

### Embodiment 3

The embodiment introduces a wireless access controller (AC), which includes the following units:
a first unit, configured to receive and store an IP address of a terminal accessing a wireless network through an initial network accessing flow sent by an AP for use when the terminal performs fast handover;
a second unit, configured to: when the terminal accesses the wireless network through the fast handover and uses an IP address used when initially accessing the network, send the stored IP address used when the terminal initially accesses the network to a new AP to which the fast handover is performed.

In addition, the working process of the above AC may refer to the corresponding descriptions in the embodiment 1, which will not be repeated here.

### Embodiment 4

The embodiment provides a system for implementing IP mobility, and the system at least includes the access point device described in the above embodiment 2 and the wireless access controller described in the above embodiment 3. The working process of the access point device may refer to the corresponding contents in the embodiment 2, and the working process of the wireless access controller may refer to the corresponding contents in the embodiment 3, which will not be repeated here.

As can be seen from the above embodiments, the mobile information of the terminal is acquired by using the home router in the technical scheme of the present invention, so that a same IP address is maintained when the terminal moves in the IP network, the router rapidly refreshes a forwarding port table, thereby maintaining the service continuity. Therefore, the data can be forwarded and the IP mobility can be supported by using a single bearer network, which avoids adding another set of network protocols to support the IP mobility (such as MIP/PMIP protocol and so on). It can be seamlessly integrated with the future network architectures such as the software defined network and the control and forwarding separation network and so on.

The ordinary person skilled in the art can understand that all or part of the steps in the above method can be completed by a program instructing related hardware, and the program can be stored in a computer readable memory medium, such as a read-only memory, magnetic disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present invention is not limited to any combination of hardware and software in a specific form.

The above description is only the preferred examples of the present invention, which is not used to limit the protection scope of the embodiments of the present invention. All the modifications, equivalent substitutions, and improvements, etc. made within the essence and principle of the embodiments of the present invention shall fall into the protection scope of the embodiments of the present invention.

### Industrial Applicability

A scheme of the home router obtaining mobile information of the terminal is proposed in the technical scheme of the present invention (The home router refers to the first routing device which the uplink data of the terminal go through after the terminal accesses through the wireless network. The uplink data refer to data sent by the terminal to the network side, and data sent from the network side to the terminal are called the downlink data), so that a same IP address is maintained when the terminal moves in the IP network, the router rapidly refreshes a forwarding port table, thereby maintaining the service continuity. Moreover, in the technical scheme of the present invention, the data can be forwarded and the IP mobility can be supported by using a single bearer network, which avoids adding another set of network protocols to support the IP mobility (such as MIP/PMIP protocol and so on). It can be seamlessly integrated with the future network architectures such as the software defined network and the control and forwarding separation network and so on.

## Claims

1. A method for implementing IP mobility, comprising:
a wireless access controller (AC) receiving and storing an IP address monitored by a wireless access point (AP) and used when a terminal initially accesses a network;
when the terminal accesses a network through fast handover and uses the IP address used when initially accessing the network, the AC sending a stored IP address used when the terminal initially accesses the network to a new access point when the terminal accesses the network through fast handover;
the new access point sending a terminal handover message to a home router corresponding to the terminal, to notify the home router that the terminal has become an access user of the new access point.

2. The method according to claim 1, wherein, the terminal handover message carries a source IP address and a source media access control (MAC) address of a terminal handing over to the new AP.

3. The method according to claim 2, wherein,
the terminal handover message is a proxy address resolution protocol (ARP) message or a newly defined message.

4. The method according to claim 2 or 3, further comprising:
the home router receiving the terminal handover message, according to the source MAC address in the terminal handover message, refreshing an IP address/port table and an MAC address/port table, and sending all downlink data of the terminal to the port.

5. The method according to claim 4, wherein, the process of an AC receiving and storing an IP address monitored by an AP and used when a terminal initially accesses a network is as follows:
when the terminal accesses the network through an initial network accessing flow, a source AP when the terminal accesses the network monitoring the initial network accessing flow in real time, and sending a monitored IP address used when the terminal initially accesses the network to a corresponding AC; and
the AC receiving and storing the IP address.

6. The method according to claim 5, wherein, in the initial network accessing flow, a process of the terminal acquiring an IP address used when initially accessing the network is as follows:
a terminal which passes an identity authentication applying for an IP address by means of dynamic host configuration protocol (DHCP), and the home router allocating or proxy allocating an IP address to the terminal; or
a network administrator allocating a fixedly-used IP address to the terminal.

7. An access point (AP) device, comprising:
a first unit, configured to monitor an initial network accessing flow of a terminal in real time;
a second unit, configured to send an IP address allocated to the terminal in the monitored initial network accessing flow to a corresponding access controller (AC) for use when the terminal performs fast handover.

8. The device according to claim 7, further comprising:
a third unit, configured to: when a terminal hands over to a current AP device through a fast handover flow and uses an IP address used when initially accessing the network, receive an IP address of a terminal successfully handing over to the current AP sent by the corresponding AC, and send a terminal handover message to a home router corresponding to the terminal newly handing over to the current AP.

9. The device according to claim 8, wherein,
the terminal handover message carries a source IP address and a source media access control (MAC) address of the terminal newly handing over to the AP.

10. The device according to claim 8 or 9, wherein,
the terminal handover message is a proxy address resolution protocol (ARP) message or a newly defined message.

11. A wireless access controller (AC), comprising:
a first unit, configured to receive and store an IP address of a terminal accessing a wireless network through an initial network accessing flow sent by a wireless access point (AP) for use when the terminal performs fast handover;
a second unit, configured to: when the terminal accesses the wireless network through the fast handover and uses an IP address used when initially accessing the network, send a stored IP address used when the terminal initially accesses the network to a new AP to which the fast handover is performed.

12. A system for implementing IP mobility, comprising the access point device according to any of claims 7 to 10 and the wireless access controller according to claim 11.
